# EUROPÄISCHE PATENTSCHRIFT

(11) **EP 1 118 563 B1**
(45) Veröffentlichungstag und Bekanntmachung des Hinweises auf die Patenterteilung: **07.12.2005**
(21) Anmeldenummer: 00127209.5
(22) Anmeldetag: 14.12.2000
(51) Int. Cl.: B65H 29/02

(54) **Greifersystem mit verstellbarer Geschwindigkeit**
Gripping system with variable speed
Sytème de préhension à vitesse variable

(30) Priorität: 20.01.2000 US 488254
(43) Veröffentlichungstag der Anmeldung: 25.07.2001
(73) Patentinhaber: Goss International Americas, Inc., Dover, NH 03820 (US)
(72) Erfinder: Cassoni, Robert Paul, Centerville, OH 45459 (US)
(74) Vertreter: Domenego, Bertrand

(56) Entgegenhaltungen:
- CH-A- 690 301
- DE-A- 3 806 646
- US-A- 3 831 932
- US-A- 5 901 997

## Beschreibung

Die vorliegende Erfindung betrifft ein Greifersystem mit einer bewegbaren Greifereinheit sowie ein Verfahren zum Greifen von Druckprodukten gemäß den Oberbegriffen der Ansprüche 1 und 20.

Ein Greifersystem mit den Merkmalen des Oberbegriffs des Anspruches 1 ist aus US-B-5,901,997 bekannt.

In Rollen-Druckmaschinen wird eine fortlaufende Materialbahn, z. B. aus Papier, bedruckt und anschließend in einer Schneideeinheit in Buchblöcke geschnitten, die z. B. Abschnitte von Zeitungen bilden. Zum Transport und zur Bearbeitung der Buchblöcke, z. B. zur Durchführung eines Schneidevorgangs, müssen die Buchblöcke oft von entlang einer Führungsschiene bewegbaren Greifern sicher erfasst werden.

In der US 5,727,783 ist eine Vorrichtung zum Auslegen von bedruckten Bogen beschrieben, bei der eine Vielzahl von die Druckprodukte haltenden Greifern in vorgegebenem Abstand entlang einer Führungsschiene bewegt wird. Die Druckprodukte sind jedoch bezüglich ihres jeweiligen Greifer ortsfest und müssen, um verlangsamt zu werden, an eine Bremsvorrichtung übergeben werden. Bei der Übergabe kann es zu Beschädigungen der Druckprodukte kommen.

Es ist eine Aufgabe der vorliegenden Erfindung, ein Greifersystem und ein Verfahren zum Greifen von Druckprodukten zu schaffen, bei dem die Gefahr von Beschädigungen der Signaturen reduziert ist.

Diese Aufgabe wird erfindungsgemäß durch ein Greifersystem mit den Merkmalen gemäß Anspruch 1 gelöst.

Die verfahrenstechnische Lösung erfolgt durch ein Verfahren mit den Merkmalen gemäß Anspruch 20.

Eine erfindungsgemäße Greifereinheit umfasst ein Gehäuse, einen ersten Greiferarm und einen zweiten Greiferarm zum Erfassen eines Druckprodukts, wobei der erste und zweite Greiferarm relativ zum Gehäuse verschiebbar sind. Das Gehäuse ist bevorzugt entlang einer Führungsschiene bewegbar.

Da der erste und zweite Greiferarm relativ zum Gehäuse verschiebbar sind, kann die Geschwindigkeit des von den Greiferarmen gehaltenen Druckprodukts bezüglich der Geschwindigkeit des Gehäuses verändert werden. Diese Geschwindigkeitsänderung kann erfolgen, während das Druckprodukt von den Greiferarmen festgehalten wird.

Vorzugsweise ist jeder der Greiferarme jeweils an einem separaten Stab befestigt, wobei jeder der Stäbe an seinen Enden an einem verschiebbaren Schlitten befestigt ist, der in einer in einer Seite des Gehäuses gebildeten Aussparung verschiebbar ist. Das Gehäuse hat vorzugsweise die Form eines umgekehrten U. Der erste Stab ist vorzugsweise an einem Ende bezüglich den Schlitten ortsfest und der zweite Stab ist vorzugsweise drehbar, so dass er den zweiten Greiferarm derart bewegen kann, dass dieser den zweiten Greiferarm bewegt und ein Druckprodukt gegen den drehfesten ersten Arm ergriffen wird.

Der drehbare zweite Greiferarm ist vorzugsweise an einem Ende bezüglich des Schlittens vorgespannt, so dass der zweite Greiferarm in eine geöffnete Position bewegt wird.

Durch einen mit dem drehbaren zweiten Stab und einem der Schlitten verbundenen Stellhebel ist der zweite Stab entgegen der Federkraft bewegbar, so dass der zweite Greiferarm das Druckprodukt ergreift. Eine Kurvenscheibe kann in ihrer Endlage festgestellt werden, so dass der Hebel in einer geschlossenen Position gehalten wird. Der Hebel kann mittels eines Riegels in der geschlossenen Position festgestellt werden, wobei eine Drehung des zweiten Stabs zurück in die geöffnete Position verhindert wird.

Sobald der Riegel gelöst ist, kann das Produkt freigegeben werden, da die auf den zweiten Stab wirkende Vorspannungskraft den zweiten Greiferarm in eine geöffnete Position bewegt.

Ferner kann eine Kurvenscheibe vorgesehen sein, die mit einem vorzugsweise V-förmigen, zweiarmigen Scharnier verbunden ist. Ein Arm des Scharniers ist vorzugsweise seitlich am Gehäuse befestigt und ein weiterer Arm ist mit dem verschiebbaren Schlitten verbunden. Eine Kurve kann in der Weise auf die Kurvenscheibe wirken, dass das V-förmige Scharnier verflacht wird und so der verschiebbare Schlitten in der Aussparung bezüglich des Gehäuses bewegt wird. Das Scharnier kann in seiner Endlage festgestellt werden. Jede Seite der Greifereinheit umfasst vorzugsweise eine Greifer/Scharnieranordnung.

Eine weitere Ausführungsform der vorliegenden Erfindung umfasst eine Greifervorrichtung mit einer Führungsschiene und einer Vielzahl von in der Führungsschiene laufenden Greifereinheiten. Jede der Greifereinheiten umfasst ein Gehäuse, einen ersten Greiferarm und einen zweiten Greiferarm zum Erfassen eines Druckprodukts, wobei der erste und zweite Greiferarm bezüglich des Gehäuses verschiebbar sind.

Die Greifervorrichtung kann ferner einen Kettenantrieb zum Antreiben der Greifereinheiten mit vorzugsweise konstanter Geschwindigkeit umfassen. Eine Kurve kann vorgesehen sein, mittels derer die Greiferarme einer jeweiligen Greifereinheit bezüglich des Gehäuses verschiebbar sind. Dadurch ist die Geschwindigkeit des Druckprodukts veränderbar, während das Druckprodukt gehalten wird. Die Kurve kann mit einer Kurvenscheibe zusammen wirken, die mit einem verschiebbaren Schlitten verbunden ist, in dem die Greiferarme im Gehäuse gelagert sind.

Gemäß dem erfindungsgemäßen Verfahren zum Greifen von Druckprodukten wird ein Druckprodukt in einer Greifereinheit ergriffen und relativ zur der Greifereinheit bewegt, wobei gleichzeitig ein sicherer Halt des Druckproduktes im Greifer gewährleistet wird. Die Druckprodukte werden dabei vorzugsweise von zwei Greiferarmen erfasst, die in einer Aussparung in einem Gehäuse verschoben werden. Die Verschiebung kann beispielsweise mittels einer Kurvenanordnung bewirkt werden.

Der zweite Greiferarm der Greifereinheit ist vorzugsweise drehbar, wobei das Verfahren weiterhin vorsieht, dass der zweite Greiferarm in der geschlossenen Position mittels eines Riegels festgestellt wird und dass der Riegel zur Freigabe des Produkts gelöst wird.

Weitere Vorteile und vorteilhafte Ausführungsformen der vorliegenden Erfindung sind Gegenstand der nachfolgend dargestellten Figuren sowie deren Beschreibungen.

Es zeigen im Einzelnen:
- Fig. 1: eine erste Seite einer ersten Ausführungsform einer entlang einer Führungsschiene geführten erfindungsgemäßen Greifereinheit in einer geöffneten Position;
- Fig. 2: eine erste Seite der in Fig. 1 gezeigten Greifereinheit, bei der sich die Greiferarme bezüglich des Gehäuses in einer vorwärts bewegten Position befinden;
- Fig. 3: eine erste Seite der in Fig. 1 gezeigten Greifereinheit, bei der die Greiferarme in der geschlossenen Position festgestellt sind;
- Fig. 4: eine perspektivische Darstellung der Greifereinheit nach Fig. 2;
- Fig. 5: eine zweite Seite der Greifereinheit nach Fig. 3;
- Fig. 6: eine zweite Seite der Greifereinheit, deren Greiferarme in den hinteren Bereich des Gehäuses der Greifereinheit bewegt sind;
- Fig. 7: die Greifereinheit nach Fig. 6 mit geöffneten Greiferarmen;
- Fig. 8: eine schematische Darstellung des zweiten Greiferarms und des Stabs der Greifereinheit in der ersten Ausführungsform;
- Fig. 9: eine Seitenansicht einer zweiten Ausführungsform einer erfindungsgemäßen Greifereinheit;
- Fig. 10: eine perspektivische Darstellung des hinteren und seitlichen Abschnitts der zweiten Ausführungsform;
- Fig. 11: eine perspektivische Draufsicht der Greifereinheit nach Fig. 9;
- Fig. 12: eine perspektivische Vorderansicht der Greifereinheit nach Fig. 9;
- Fig. 13: die zweite Ausführungsform der Greifereinheiten in einer Führungsschiene; und
- Fig. 14: die zweite Ausführungsform der Greifereinheiten in einer Führungsschiene;

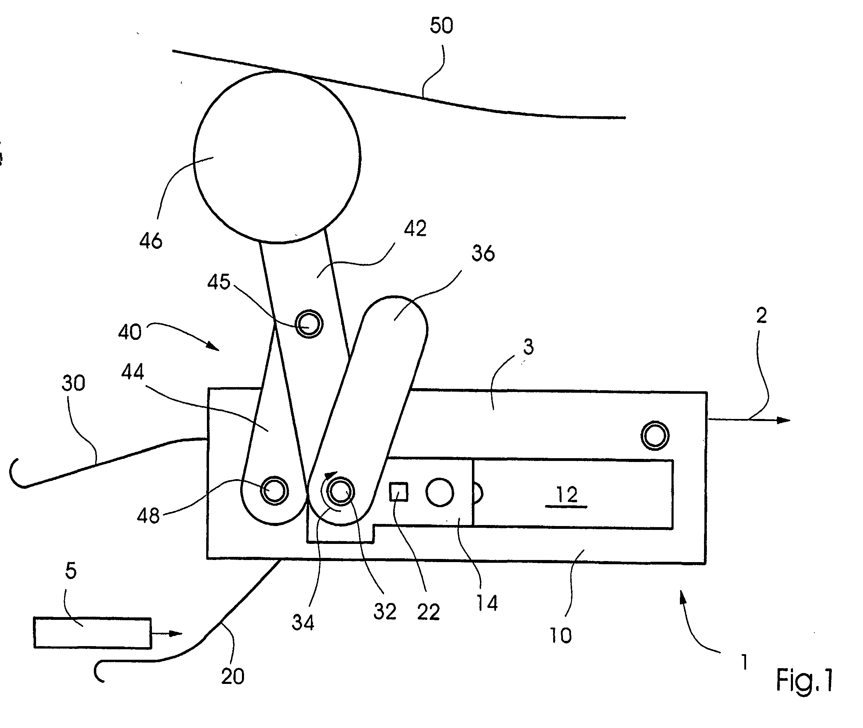

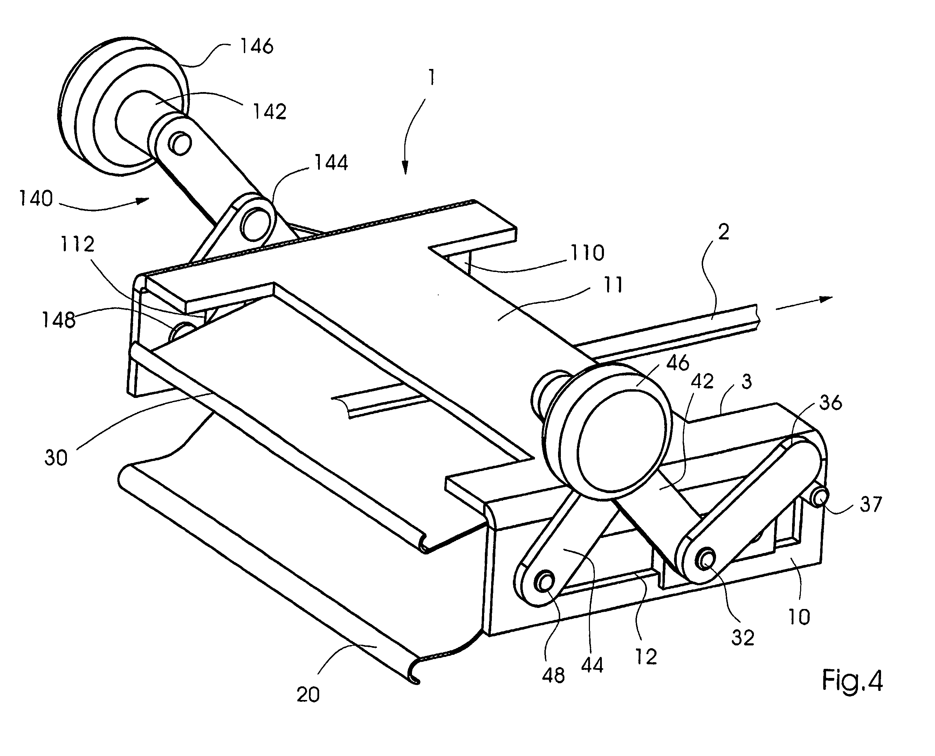

In Fig. 1 ist eine in einer Führungsschiene oder Führungsbahn 2 laufende Greifereinheit 1 gezeigt, die z. B. durch eine mit gleichmäßiger Geschwindigkeit laufende Kette angetrieben wird. Die Greifereinheit 1 umfasst ein Gehäuse 3 mit einer ersten Seite 10 und einer zweiten Seite 110 (s. Fig. 4). Das Gehäuse 3 kann z. B. in Form eines umgekehrten U ausgebildet sein. Die erste Seite 10 weist eine Aussparung 12 auf, in der ein Schlitten 14 vorwärts und rückwärts verschiebbar ist. Die Greifereinheit 1 umfasst zum Erfassen eines Druckprodukts 5 einen ersten Greiferarm 20 und einen zweiten Greiferarm 30. Der erste Greiferarm 20 ist bezüglich des Schlittens 14 ortsfest angeordnet und z. B. an einem Stab 22 befestigt, der fest mit einem weiteren Schlitten in einer Aussparung auf der zweiten Seite (110) des Gehäuses 3 verbunden ist.

Der zweite Greiferarm 30 ist fest an einem Stab 32 befestigt, der im Schlitten 14 drehbar gelagert ist. Der zweite Greiferarm 30 ist bezüglich des Schlittens 14 mit einer Federkraft beaufschlagt, so dass sich der Greiferarm 30 in die durch den Pfeil 34 angedeutete Richtung dreht und auf diese Weise in eine geöffnete Position bewegt wird, wie in Fig. 1 gezeigt ist. Am Stab 32 ist ein Stellhebel 36 befestigt. Ein Arm 42 eines V-förmigen Scharniers 40 ist drehbar am Stab 32 und über einen Stift 45 an einem zweiten Arm 44 des Scharniers 40 befestigt. Der zweite Arm ist über einen Stift 48 drehbar am Gehäuse 3 befestigt. Am Arm 42 ist eine Kurvenscheibe 46 befestigt.

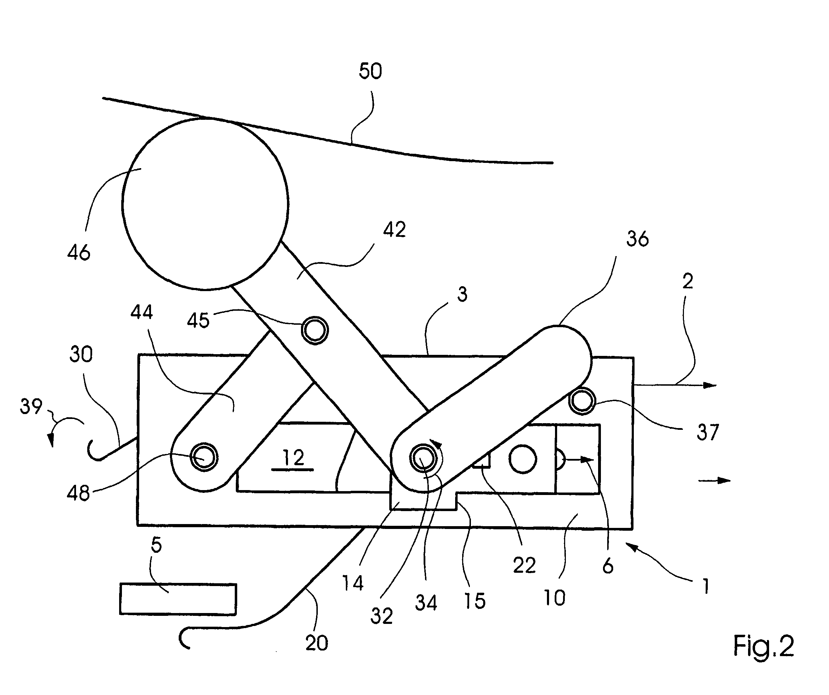

Auf die Kurvenscheibe 46 wirkt eine Kurve 50, durch welche das Scharnier 40 geöffnet wird, wobei der Schlitten 14 in der Aussparung 12 in die Richtung des Pfeils 6 vorwärts bewegt wird, wie in Fig. 2 gezeigt ist. Durch Kooperation des Stellhebels 36 mit einem Stellstift 37 wird der Hebel 36 gegen die durch den Pfeil 34 in Fig. 1 angedeutete Kraft der Feder in die durch den Pfeil 35 angezeigte Richtung bewegt. Der Stellarm 36, der fest mit dem Stab 32 verbunden ist, bewirkt also eine Drehung des Stabs 32 im Gegenuhrzeigersinn.

Da der zweite Greiferarm 30 fest am Stab 32 befestigt ist, dreht sich der zweite Greiferarm 30 in die durch den Pfeil 39 angedeutete Abwärtsrichtung.

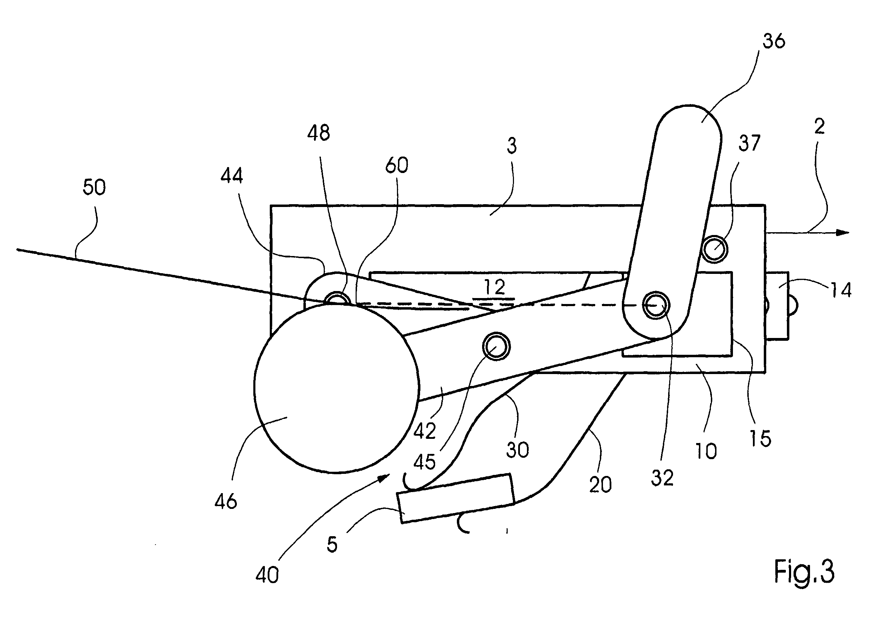

Wie in Fig. 3 gezeigt ist, bewirkt die Kurve 50 eine Abwärtsbewegung der Kurvenscheibe 46, so dass das Scharnier 40 an der Mittellinie 60 festgestellt wird. Der Schlitten 14 befindet sich in der vordersten Position in der Aussparung 12. Ein Ende des Schlittens 14 kann an der Innenseite der Aussparung 12 aus dem Gehäuse 3 herausragen. Die Vorwärtsbewegung des Schlittens 14 ist durch eine mit dem Ende der Aussparung 12 zusammenwirkende Stufe 15 (s. Fig. 2) begrenzt.

In der in Fig. 3 gezeigten Position wurde der Hebel 36 im Gegenuhrzeigersinn gedreht, so dass der Stab 32 und der Greiferarm 30 gedreht wurden und das Druckprodukt 5 erfasst haben.

In Fig. 4 ist eine perspektivische Darstellung der Greifereinheit 1 nach Fig. 3 gezeigt. Das Gehäuse 3 umfasst eine erste Seite 10, eine zweite Seite 110 und eine Oberseite 11, die auf der schematisch dargestellten Führungsschiene 2 laufen kann. Die zweite Seite 110 umfasst eine Aussparung 112, in der ein Schlitten verschiebbar aufgenommen sein kann. Eine Kurvenscheibe 146 ist an einem V-förmigen Scharnier 140 mit einem ersten Arm 142 und einem zweiten Arm 144 angeordnet.

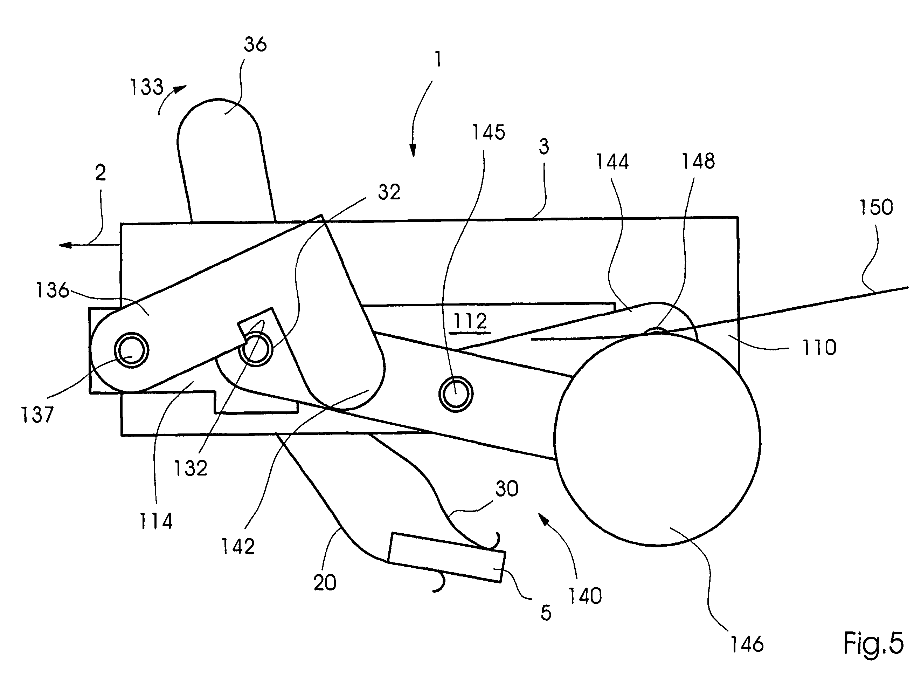

In Fig. 5 ist die der in Fig. 3 gezeigten Seite gegenüber liegende Seite der Greifereinheit 1 gezeigt. Das zweite Scharnier 140 ist durch eine zweite, auf eine Kurvenscheibe 146 wirkende Kurve 150 in ihrer Endlage festgestellt. Der Arm 144 des Scharniers 140 ist drehbar mit einem Stift 148 und einem Stift 145 verbunden. Der Arm 142 des Scharniers 140 ist mit dem Stift 145 und dem Stab 32 verbunden. Durch die Wirkung der Kurve 150 wird die Kurvenscheibe 146 nach unten bewegt und eine Vorwärtsbewegung des Schlittens 114 in der Aussparung 112 bewirkt.

Ein Riegel 136 ist über einen Stift 137 in der Weise drehbar am Schlitten 114 befestigt, dass er eine im Uhrzeigersinn gerichtete Kraft um den Stift 137 herum ausüben kann. Diese im Uhrzeigersinn gerichtete Kraft kann z. B. durch eine Feder erzeugt werden oder dadurch, dass der Schwerpunkt des Riegels 136 immer hinter dem Stift 137 angeordnet ist. Nachdem der Stellhebel 36 in die Richtung des Pfeils 133 bewegt wurde und auf diese Weise, wie anhand von Fig. 3 erläutert wurde, eine Drehung des Stabs 32 bewirkt hat, stellt der Riegel 136 den Stab 32 durch Kooperation mit einer am zweiten Ende des Stabs 32 angeordneten Stufe 132 fest. Wie in Fig. 5 gezeigt ist, verhindert der Riegel 136 auf diese Weise eine Drehung des Stabs 32 im Gegenuhrzeigersinn und damit ein Öffnen des zweiten Greiferarms 30.

Die Greifereinheit 1 kann also vorzugsweise mit konstanter Geschwindigkeit entlang der Führungsschiene 2 geführt werden und dabei ein Druckprodukt 5 halten. Zur Veränderung der Geschwindigkeit des Druckprodukts entlang der Führungsschiene 2 wirken die Kurven 50 auf die Kurvenscheiben 46 bzw. 146 und bewirken so eine Verschiebung der Schlitten 14 und 114 bezüglich des Gehäuses 3, das mit konstanter Geschwindigkeit weiter bewegt werden kann. Auf diese Weise erfolgt in Abhängigkeit von der Kontur der Kurve eine Verschiebung der Greiferarme in Vorwärts- oder Rückwärtsrichtung. Diese Möglichkeit der Geschwindigkeitsveränderung ohne Änderung der Geschwindigkeit des Gehäuses bietet einige Vorteile; z. B. wird der Bedarf an separaten Bremsvorrichtungen zum Abbremsen der Druckprodukte reduziert oder entfällt ganz.

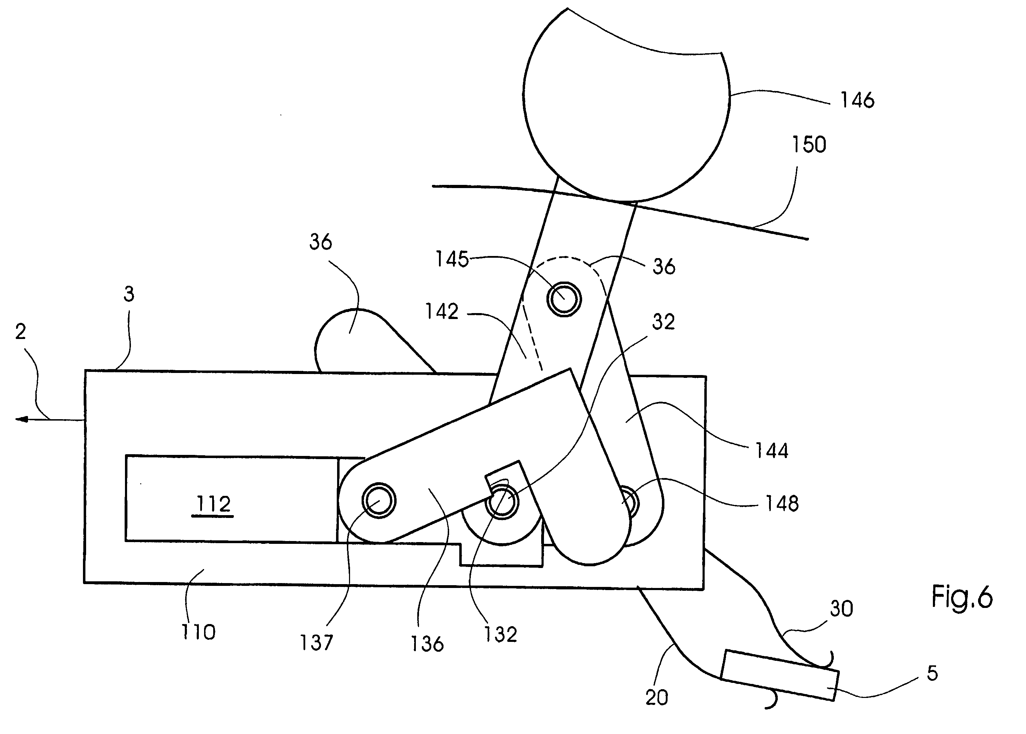

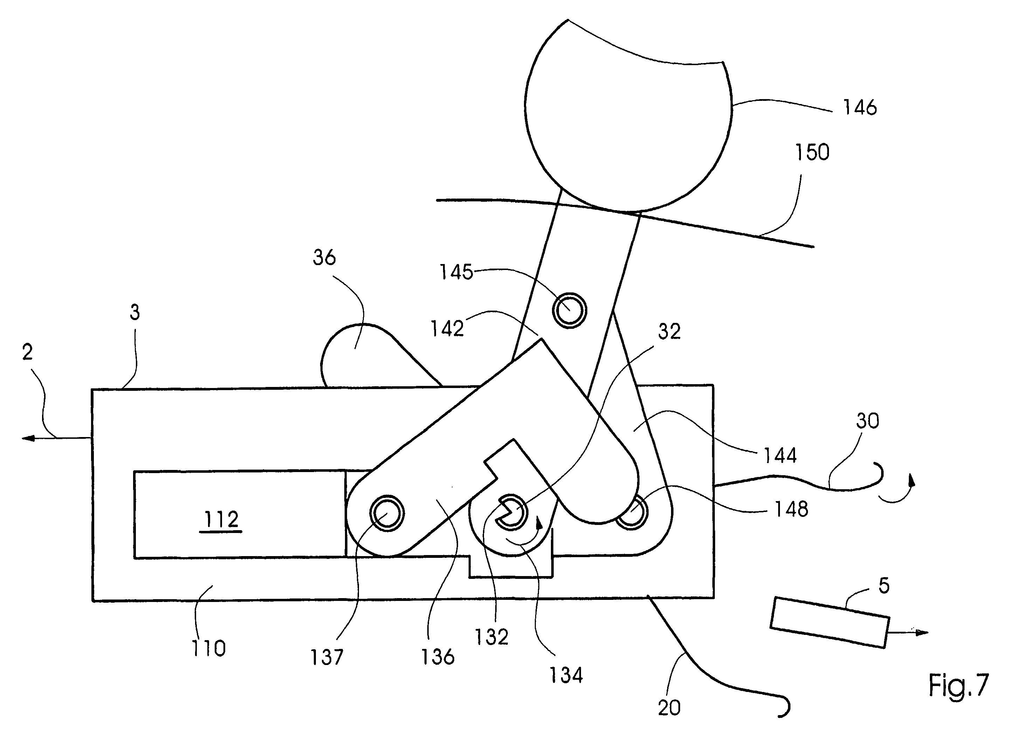

Zur Freigabe des Druckprodukts, z. B. einer Signatur, wird die jeweilige Kurvenscheibe durch die Kurve in die oberste Position bewegt. Wie in Fig. 6 gezeigt ist, bewegt die Kurve 150 die Kurvenscheibe 146 nach oben, wobei der Riegel 136 in Richtung des Stiftes 148 verschoben wird. Dabei ist das Druckprodukt 5 immer noch von der Greifereinheit erfasst. In Fig. 7 befindet sich die Kurvenscheibe 146 relativ zur Oberkante des Gehäuses 3 in einer noch höheren Position, so dass durch das Zusammenwirken des Riegels 136 mit dem Stift 148 der Stab 32 und die stufenförmige Ausnehmung 132 gedreht werden und der Stab 32 freigegeben wird. Durch die Vorspannung des Stabs 32 in die durch den Pfeil 134 angezeigte Richtung wird der Stab 32 zusammen mit dem Hebel 36 und dem zweiten Greiferarm 30 gedreht, wie durch den Pfeil 135 angedeutet ist.

Das Druckprodukt 5 wird auf diese Weise von der Greifereinheit 1 freigegeben und kann beispielsweise auf einem Förderband abgelegt oder an eine weitere Greifereinrichtung übergeben werden.

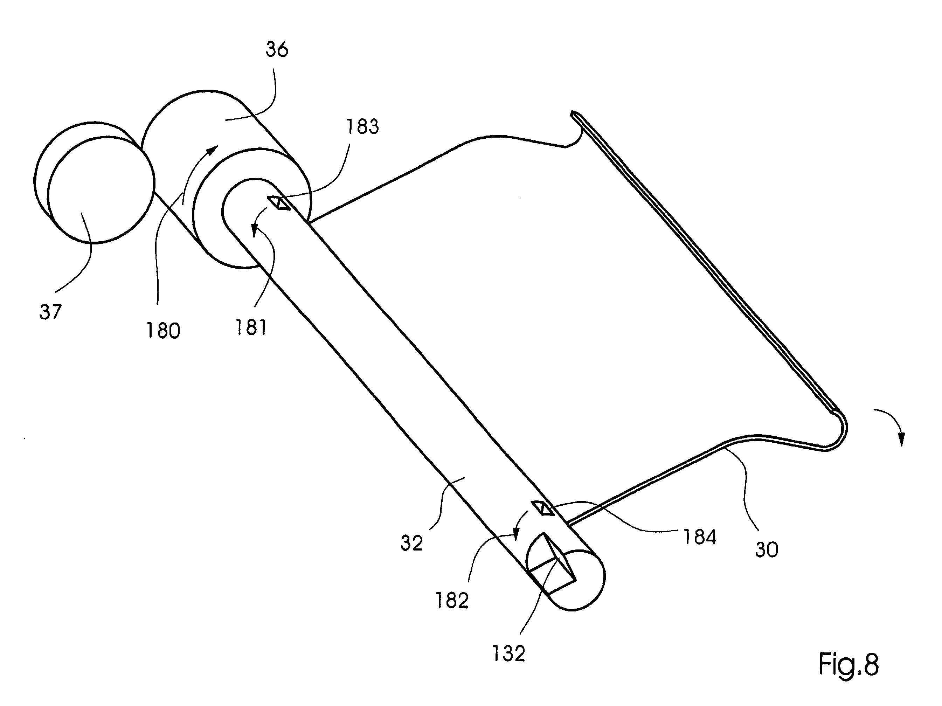

Fig. 8 zeigt eine schematische Darstellung einer möglichen Ausgestaltung des Stabs 32, des Stellhebels 36 und des zweiten Greiferarms 30, die alle fest miteinander verbunden sind. Der Stellstift 37 kann auf den Hebel 36 wirken, wobei gegen die durch die Pfeile 181 und 182 angedeutete Federkraft eine Drehbewegung des Hebels 36 in die Richtung des Pfeils 180 ausgelöst wird. Der Stab 32 umfasst vorzugsweise zwei Schlitze 183 und 184, in denen z. B. Blattfedern zur Erzeugung der Federkraft aufgenommen sein können. Die anderen Enden der Blattfedern können am Gehäuse 3 (s. Fig. 4) befestigt sein. Die im Stab 32 eingebrachte stufenförmige Ausnehmung 132 ist ebenfalls zu sehen.

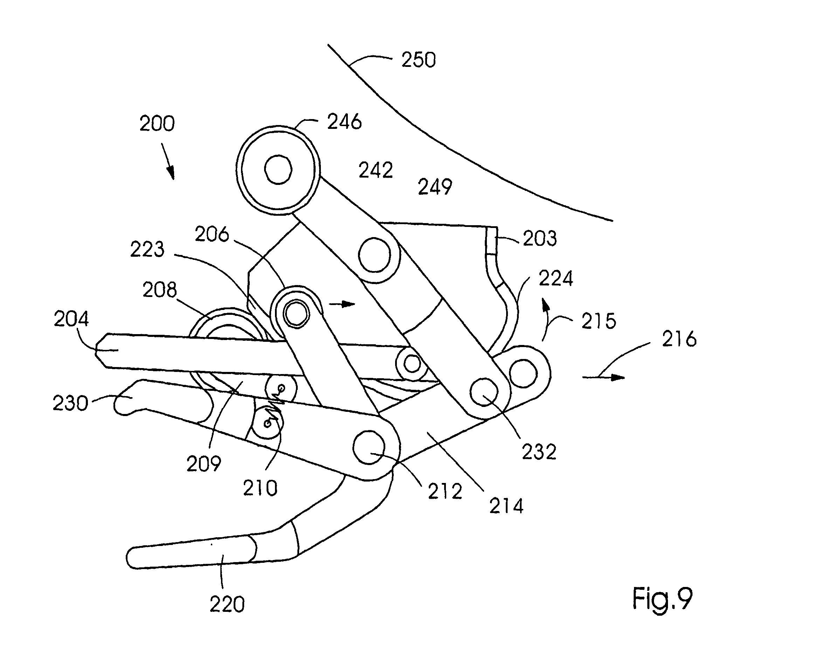

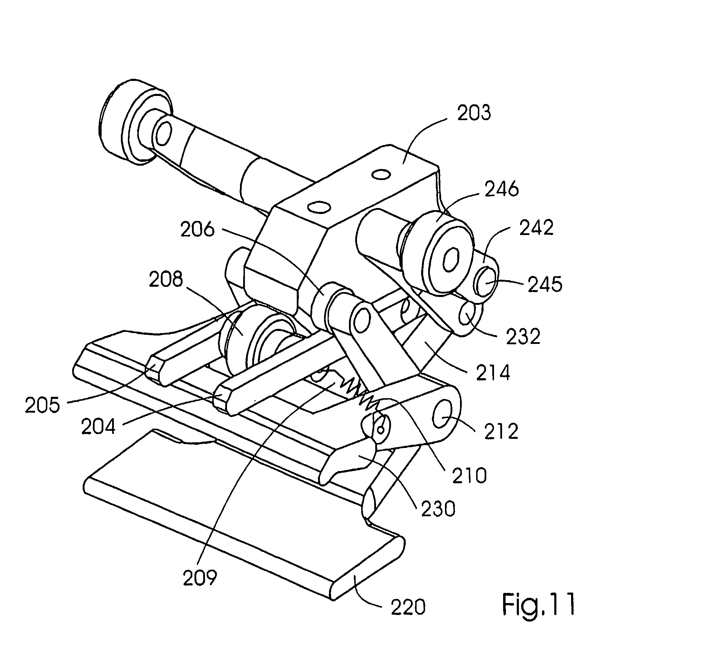

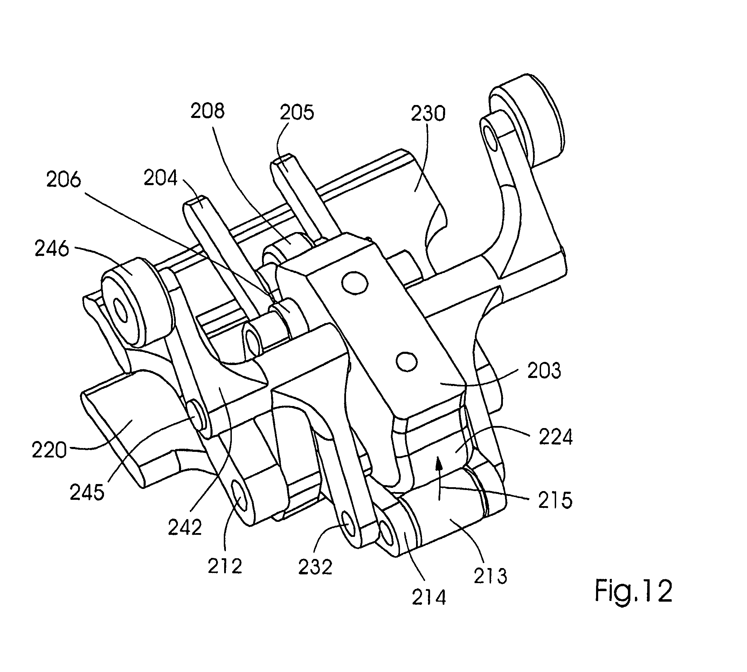

Fig. 9 ist eine Seitenansicht einer zweiten Ausführungsform einer erfindungsgemäßen Greifereinheit 200. Die Greifereinheit 200 umfasst ein Gehäuse 203 mit Zinken 204 und 205 (s. Fig. 11). Das Gehäuse 203 umfasst zwei Walzenflächen 223 und 224, auf denen eine Walze 208 bzw. eine Walze 213 (Fig. 12) bewegbar ist.

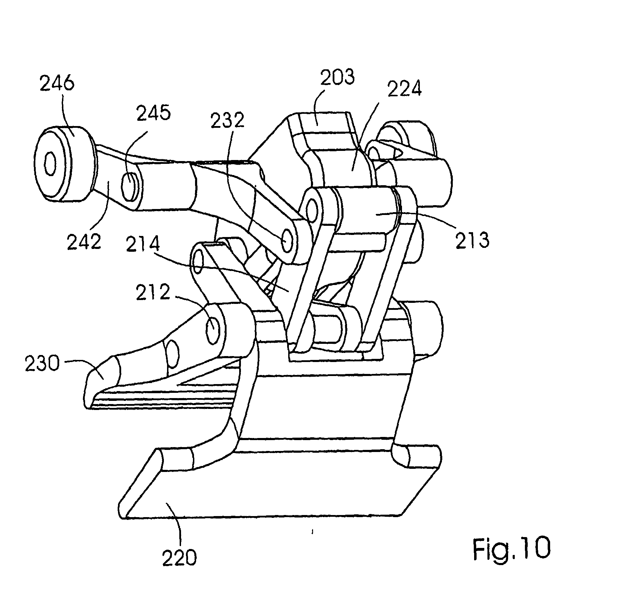

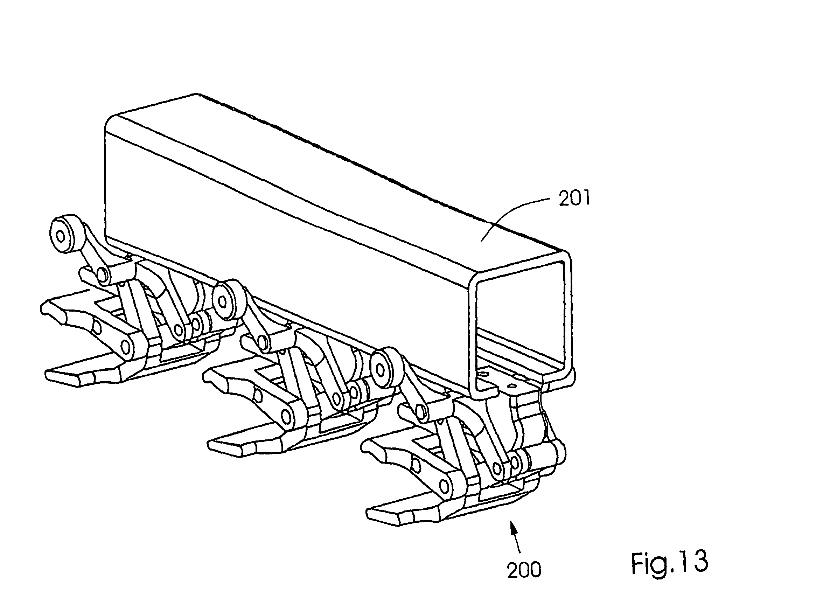

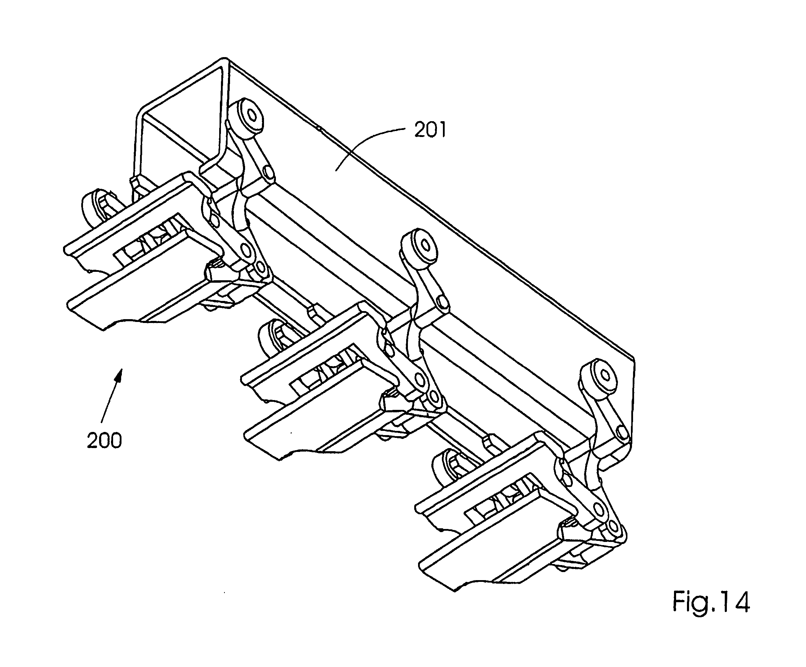

Wie in Fig. 13 und 14 gezeigt ist, laufen die Greifereinheiten 200 in einer Führungsschiene 201, wobei die Oberseite des Gehäuses 203 z. B. an einer in der Führungsschiene 201 laufenden Kette befestigt ist. Wie in Fig. 9, 10, 11 und 12 gezeigt ist, umfasst der Greifer 200 einen ersten Greiferarm 220 und einen zweiten Greiferarm 230 zum Erfassen eines Druckprodukts. Der erste Greiferarm 220 wird von Walzen 206 gehalten, die entlang den Zinken 204, 205 abrollen können, so dass der Greiferarm 220 bezüglich des Gehäuses 203 verschiebbar ist.

Der zweite Greiferarm 230 ist über einen Schwenkpunkt bzw. Stift 212 drehbar mit dem Arm 220 verbunden. Eine schematisch dargestellte Tellerfeder-Anordnung 210 hält den Arm 230 in der geöffneten Position, wenn sich der Arm 220 in einer hinteren (in Fig. 9 linken) Position befindet. Das andere Ende der Feder ist an einem Arm 209 befestigt, der an einem Ende mit der Walze 208 und am anderen Ende mit dem Stift 212 verbunden ist. Die Feder 210 kann an der Innenseite des Arms 230 angeordnet sein, ist hier jedoch aus Gründen der Deutlichkeit an der Außenseite gezeigt.

Der Arm 230 ist bezüglich des Arms 220 um den Stift 212 drehbar gelagert, der auch mit einem Ende eines Arms 214 verbunden ist. Das andere Ende des Arms 214 ist über einen Schwenkpunkt 232 mit einem Hebel 242 verbunden, der um eine im Gehäuse 203 drehbar gelagerte Stange 245 drehbar ist. An einem Ende des Hebels 242 ist eine Kurvenscheibe 246 angeordnet, die von einer Kurve 250 betätigt werden kann.

Nachfolgend wird die Funktionsweise der zweiten Ausführungsform näher erläutert: Wenn die Kurve 250 die Kurvenscheibe 246 abwärts bewegt, wird die an einem Ende des Arms 214 gelagerte Walze 213 entlang der Walzenfläche 224 in die durch den Pfeil 215 angedeutete Aufwärtsrichtung bewegt. Gleichzeitig wird der Stift 212 durch den Arm 214 in die durch den Pfeil 216 angedeutete Vorwärtsrichtung gezogen, wodurch die Greiferarme 220 und 230 vorwärts gleiten, so dass die Walzen 206 auf den Zinken 204, 205 vorwärts rollen. Der Arm 209 wird durch den Stift 212 ebenfalls vorwärts gezogen, so dass die Walze 208 entlang der Walzenfläche 223 rollt und, wie in Fig. 9 gezeigt ist, abwärts bewegt wird. Die Spannung der Feder 210 lässt demgemäß nach, und der Arm 230 wird abwärts bewegt, so dass zwischen den Armen 220 und 230 ein Druckprodukt erfasst wird. Die Walze 213 kann in der Erfassungsposition festgestellt werden, indem die Walze 213 über einer gebogenen Position in der Fläche 224 verbleibt. Zur Freigabe des Produkts kann eine Kurve vorgesehen sein, durch welche die Kurvenscheibe 246 aufwärts und die Walze 213 abwärts bewegt wird.

Die zweite Ausführungsform ist der ersten insoweit vorzuziehen, als keine Riegel nötig sind und die Verschiebung durch Abrollen bewirkt wird, wodurch die Reibung reduziert wird.

Die hier verwendete Bezeichnung "Greiferarm" umfasst neben den in den Zeichnungen dargestellten gebogenen Blechen jede beliebige Anordnung, die zum Erfassen von Druckprodukten geeignet ist. Die Bezeichnung "Gehäuse" schließt jede strukturelle Einheit ein, darunter auch ein Rahmen oder ein Gestänge. Ein "Schlitten" im Sinne dieser Anmeldung ist ein beliebiges bewegbares Element. Eine "Verschiebung" ist als eine gleitende Relativbewegung zwischen zwei Elementen definiert, die auch eine Rollanordnung umfasst.

### Liste der Bezugzeichen

- 1: Greifereinheit
- 2: Führungsschiene
- 3: Gehäuse
- 5: Druckprodukt
- 6: Verschiebungsrichtung
- 10: erste Seite
- 11: Oberseite
- 12: Aussparung
- 14: Schlitten
- 20: Greiferarm
- 22: Stab
- 30: Greiferarm
- 32: Stab
- 34: Drehrichtung
- 34: Richtung der Federkraft
- 35: Richtung
- 36: Stellhebel
- 37: Stellstift
- 39: Drehrichtung
- 40: Scharnier
- 42: erster Arm
- 44: zweiter Arm
- 45: Stift
- 46: Kurvenscheibe
- 48: Stift
- 50: Kurve
- 60: Mittellinie
- 110: zweite Seite
- 112: Aussparung
- 114: Schlitten
- 132: stufenförmige Ausnehmung
- 133: Bewegungsrichtung
- 136: Riegel
- 137: Stift
- 140: Scharnier
- 142: erster Arm
- 144: zweiter Arm
- 145: Stift
- 146: Kurvenscheibe
- 148: Stift
- 150: Kurve
- 180: Drehrichtung
- 181: Richtung der Federkraft
- 182: Richtung der Federkraft
- 183: Schlitz
- 184: Schlitz
- 200: Greifereinheit
- 201: Führungsschiene
- 203: Gehäuse
- 204: Zinken
- 205: Zinken
- 206: Walzen
- 208: Walze
- 209: Arm
- 210: Feder
- 212: Stift
- 213: Walze
- 214: Arm
- 216: Richtung
- 220: erster Greiferarm
- 223: Walzenfläche
- 224: Walzenfläche
- 230: zweiter Greiferarm
- 232: Schwenkpunkt
- 242: Hebel
- 245: Stange
- 246: Kurvenscheibe
- 250: Kurve

## Patentansprüche

1. Greifersystem mit
- einer Führungsbahn (2, 201) und
- einer in der Führungsbahn entlang einer Vorwärtsrichtung bewegbaren Greifereinheit (1, 200) mit einem Gehäuse (3, 203), einem ersten Greiferarm (20, 220) und einem zweiten Greiferarm (30, 230), wobei
der erste Greiferarm (20, 220) und der zweite Greiferarm (30, 230) relativ zum Gehäuse (3, 203) verschiebbar sind,
**dadurch gekennzeichnet,**
**dass** der erste Greiferarm (20,220) und der zweite Greiferarm (30, 230) zum Erfassen eines Druckprodukts (5) geeignet sind, und
**dass** der erste (20, 220) und der zweite Greiferarm (30, 230) in Vorwärts- und in Rückwärtsrichtung verschiebbar sind.

2. Greifersystem nach Anspruch 1,
**dadurch gekennzeichnet,**
**dass** das Gehäuse (3) eine erste Aussparung (12) und eine zweite Aussparung (112) umfasst und ein erster Schlitten (14) in der ersten Aussparung (12) verschiebbar angeordnet ist und ein zweiter Schlitten (114) in der zweiten Aussparung (112) verschiebbar angeordnet ist, wobei der erste und der zweite Greiferarm (20, 30) mit dem ersten und zweiten Schlitten (14, 114) verbunden sind.

3. Greifersystem nach Anspruch 2,
**gekennzeichnet durch**
einen ersten Stab (22), mit dem der erste Greiferarm (20) fest verbunden ist und der drehfest zwischen dem ersten und zweiten Schlitten (14, 114) gelagert ist.

4. Greifersystem nach Anspruch 2,
**gekennzeichnet durch**
einen drehbaren Stab (32), der drehbar zwischen dem ersten und zweiten Schlitten (14, 114) gelagert ist und mit dem der zweite Greiferarm (30) fest verbunden ist.

5. Greifersystem nach Anspruch 4,
**dadurch gekennzeichnet,**
**dass** der drehbare Stab (32) bezüglich des ersten und zweiten Schlittens (14, 114) federgespannt ist.

6. Greifersystem nach einem der Ansprüche 2 bis 5,
**gekennzeichnet durch**
einen Riegel (136) zum Feststellen des drehbaren Stabs (32).

7. Greifersystem nach einem der Ansprüche 1 bis 6,
**dadurch gekennzeichnet,**
**dass** das Gehäuse (3) die Form eines umgedrehten U hat.

8. Greifersystem nach einem der Ansprüche 2 bis 7,
**gekennzeichnet durch**
ein Scharnier (40) zum Bewegen der Schlitten (14, 114), dessen eines Ende (42) mit dem Schlitten (14, 114) und dessen anderes Ende (44) mit dem Gehäuse (3) verbunden ist.

9. Greifersystem nach Anspruch 8,
**dadurch gekennzeichnet,**
**dass** am Scharnier (40) eine Kurvenscheibe (46) befestigt ist.

10. Greifersystem nach Anspruch 1,
**dadurch gekennzeichnet,**
**dass** zum Verschieben des ersten und zweiten Greiferarms (20, 30, 220, 230) bezüglich des Gehäuses (3, 203) eine Kurvenscheibe (46, 146, 246) mit dem ersten und zweiten Greiferarm (20, 30, 220, 230) verbunden ist.

11. Greifersystem nach Anspruch 1,
**dadurch gekennzeichnet**
**dass** zum Schließen des zweiten Greiferarms (30) in Richtung des ersten Greiferarms (20) ein Stellhebel (36) mit dem ersten und zweiten Greiferarm (20, 30) verbundenen ist.

12. Greifersystem nach Anspruch 1,
**dadurch gekennzeichnet,**
**dass** der erste Greiferarm (20) drehfest ist und der zweite Greiferarm (30) drehbar ist.

13. Greifersystem nach Anspruch 1,
**dadurch gekennzeichnet,**
**dass** der erste Greiferarm (220) mit mindestens einer Walze (206) verbunden ist und dass das Gehäuse (203) mindestens einen Zinken (204, 205) umfasst, auf dem die Walze (206) abrollt.

14. Greifersystem nach Anspruch 13,
**dadurch gekennzeichnet,**
**dass** der zweite Greiferarm (230) über einen Stift (212) mit dem ersten Greiferarm (220) verbunden ist und in eine geöffnete Position vorgespannt ist.

15. Greifersystem nach Anspruch 14,
**dadurch gekennzeichnet,**
**dass** der Stift (212) mit einer Kurvenscheibe (246) verbunden ist, die den Stift (212) bewegt.

16. Greifersystem nach Anspruch 15,
**dadurch gekennzeichnet,**
**dass** der Stift (212) mit einem Arm (209) verbunden ist, der mit einer Feder (210) verbunden ist, die auch mit dem zweiten Greiferarm (230) verbunden ist.

17. Greifersystem nach einem der Ansprilche 1 bis 16,
**dadurch gekennzeichnet,**
**dass** eine Vielzahl von Greifereinheiten (1, 200) vorgesehen sind, die in der Führungsschiene (2, 201) laufen.

18. Greifersystem nach Anspruch 17,
**dadurch gekennzeichnet,**
**dass** jede Greifereinheit (1, 200) eine mit dem ersten und zweiten Greiferarm (20, 30, 220, 230) verbundene Kurvenscheibe (46, 146, 246) umfasst, mittels derer der erste und zweite Greiferarm (20, 30, 220, 230) bezüglich des Gehäuses (3, 203) verschiebbar ist.

19. Greifersystem nach Anspruch 18,
**dadurch gekennzeichnet,**
**dass** zur Kooperation mit der Kurvenscheibe (46, 146, 246) eine Kurve (50, 250) vorgesehen ist.

20. Verfahren zum Greifen von Druckprodukten,
**dadurch gekennzeichnet,**
**dass** ein Druckprodukt (5) in einer Greifereinheit (1, 200) eines Greifersystems nach einem der Ansprüche 1 bis 19 ergriffen und dann das Druckprodukt (5) während des Weitertransports relativ zur Greifereinheit (1, 200) bewegt wird.

21. Verfahren nach Anspruch 20,
**dadurch gekennzeichnet,**
**dass** das Ergreifen mittels eines Greiferarm-Paars (20, 30, 220, 230) erfolgt und die beiden Greiferarme (20, 30, 220, 230) bezüglich der Greifereinheit (1, 200) bewegt werden.

22. Verfahren nach einem der Ansprüche 20 bis 21,
**dadurch gekennzeichnet,**
**dass** die Greifereinheit (1, 200) mit gleichmäßiger Geschwindigkeit bewegt wird und das Druckprodukt (5) abgebremst wird, während es bewegt wird.

## Claims

1. Gripper system with
- a guide rail (2, 201) and
- a gripper unit (1, 200) which can move forwards along the guide rail, and which is equipped with a housing (3, 203), a first gripper arm (20, 220) and a second gripper arm (30, 230), wherein
the first gripper arm (20, 220) and the second gripper arm (30, 230) can be moved in relation to the housing (3, 203),
**characterised in that**
the first gripper arm (20, 220) and the second gripper arm (30, 230) are suitable for gripping a printing product (5), and
the first (20, 220) and the second (30, 230) gripper arms can be moved forwards and backwards.

2. Gripper system as claimed in Claim 1,
**characterised in that**
the housing (3) comprises a first cutout (12) and a second cutout (112), and **in that** a first slide block (14) is slidably arranged in the first cutout (12) and **in that** a second slide block (114) is slidably arranged in the second cutout (112) and the first and the second gripper arms (20, 30) are connected to the first and second slide blocks (14, 114).

3. Gripper system as claimed in Claim 2,
**characterised in that**
a first bar (22) is permanently connected to the first gripper arm (20) and is supported against rotation between the first and second slide blocks (14, 114).

4. Gripper system as claimed in Claim 2,
**characterised by**
a rotatable bar (32) which is rotatably supported between the first and second slide blocks (14, 114) and is permanently connected to the second gripper arm (30) .

5. Gripper system as claimed in Claim 4,
**characterised in that**
the rotatable bar (32) is spring-loaded relative to the first and second slide blocks (14, 114).

6. Gripper system as claimed in one of Claims 2 to 5,
**characterised by**
a bolt (136) for stabilisation of the rotatable bar (32).

7. Gripper system as claimed in one of Claims 1 to 6,
**characterised in that**
the housing (3) is in the form of an inverted U.

8. Gripper system as claimed in one of Claims 2 to 7,
**characterised by**
a hinge (40) for movement of the slide blocks (14, 114), of which one end (42) is connected to the slide block (14, 114) and the other end (44) of which is connected to the housing (3).

9. Gripper system as claimed in Claim 8,
**characterised in that**
on the hinge (40) there is mounted a curved plate (46).

10. Gripper system as claimed in Claim 1,
**characterised in that**
for movement of the first and second gripper arms (20, 30, 220, 230) in relation to the housing (3, 203) a curved plate (46, 146, 246) is connected to the first and second gripper arms (20, 30, 220, 230).

11. Gripper system as claimed in Claim 1,
**characterised in that**
an actuating lever (36) for closing of the second gripper arm (30) in the direction of the first gripper arm (20) is connected to the first and second gripper arms (20, 30).

12. Gripper system as claimed in Claim 1,
**characterised in that**
the first gripper arm (20) is fixed against rotation and the second gripper arm (30) is rotatable.

13. Gripper system as claimed in Claim 1,
**characterised in that**
the first gripper arm (220) is connected to at least one roller (206) and the housing (203) comprises at least one prong (204, 205) on which the roller (206) rolls.

14. Gripper system as claimed in Claim 13,
**characterised in that**
the second gripper arm (230) is connected via a pin (212) with the first gripper arm (220) and is preloaded in an open position.

15. Gripper system as claimed in Claim 14,
**characterised in that**
the pin (212) is connected to a curved plate (246) which moves the pin (212).

16. Gripper system as claimed in Claim 15,
**characterised in that**
the pin (212) is connected co an arm (209) which is connected to a spring (210) which is also connected to the second gripper arm (230).

17. Gripper system as claimed in one of Claims 1 to 16,
**characterised in that**
a large number of gripper units (1, 200) are provided which run in the guide rail (2, 201).

18. Gripper system as claimed in Claim 17,
**characterised in that**
each gripper unit (1, 200) comprises a curved plate (46, 146, 246) connected to the first and second gripper arms (20, 30, 220, 230) by means of which the first and second gripper arms (20, 30, 220, 230) are moveable relative to the housing (3, 203).

19. Gripper system as claimed in Claim 18,
**characterised in that**
a curve (50, 250) is provided for cooperation with the curved plate (46, 146, 246).

20. Method of gripping printing products,
**characterised in that**
a printing product (5) is engaged in a gripper unit (1, 200) of a gripper system as claimed in one of Claims 1 to 19 whereafter the printing product (5) is moved relative to the gripper unit (1, 200) during further transportation.

21. Method as claimed in Claim 20,
**characterised in that**
the engagement is achieved by means of a pair of gripper arms (20, 30, 220, 230) and the two gripper arms (20, 30, 220, 230) are moved relative to the gripper unit (1, 200).

22. Method as claimed in one of Claims 20 to 21,
**characterised in that**
the gripper unit (1, 200) is moved at a consistent speed and the printing product (5) is slowed down while it is in motion.

## Revendications

1. Système de préhension avec
- une voie de guidage (2, 201) et
- une unité de préhension (1, 200) pouvant se déplacer le long d'une direction d'avance dans la voie de guidage, avec un boîtier (3, 203), un premier bras de préhension (20, 220) et un second bras de préhension (30, 230), sachant que
le premier bras de préhension (20, 220) et le second bras de préhension (30, 230) peuvent se déplacer par rapport au boîtier (3, 203),
**caractérisé en ce que**, le premier bras de préhension (20, 220) et le second bras de préhension (30, 230) sont appropriés pour saisir un produit imprimé (5), et
**en ce que** le premier (20, 220) et le second bras de préhension (30, 230) peuvent se déplacer en direction d'avance et en direction de recul.

2. Système de préhension selon la revendication 1, **caractérisé en ce que** le boîtier (3) comprend un premier évidement (12) et un second évidement (112) et **en ce qu'**un premier traîneau (14) est disposé dans le premier évidement (12) de manière à pouvoir se déplacer par coulissement et un second traîneau (114) est disposé dans le second évidement (112) de manière à pouvoir se déplacer par coulissement, sachant que le premier et le second bras de préhension (20, 30) sont reliés au premier et au second traîneau (14, 114).

3. Système de préhension selon la revendication 2, **caractérisé par** un premier barreau (22), auquel le premier bras de préhension (20) est relié fixement et qui est placé de manière résistante à la rotation entre le premier et le second traîneau (14, 114).

4. Système de préhension selon la revendication 2, **caractérisé par** un barreau rotatif (32), qui est placé entre le premier et le second traîneau (14, 114) de manière à pouvoir tourner et auquel le premier bras de préhension (30) est relié fixement.

5. Système de préhension selon la revendication 4, **caractérisé en ce que** le barreau rotatif (32) est tendu comme un ressort par rapport au premier et au second traîneau (14, 114).

6. Système de préhension selon l'une quelconque des revendications 2 à 5, **caractérisé par** un verrou (136) pour fixer le barreau rotatif (32).

7. Système de préhension selon l'une quelconque des revendications 1 à 6, **caractérisé en ce que** le boîtier (3) a la forme d'un U renversé.

8. Système de préhension selon l'une quelconque des revendications 2 à 7, **caractérisé par** une charnière (40) pour déplacer les traîneaux (14, 114), dont une extrémité (42) est reliée au traîneau (14, 114) et dont l'autre extrémité (44) est reliée au boîtier (3).

9. Système de préhension selon la revendication 8, **caractérisé en ce que** sur la charnière (40) est fixé un disque-came (46).

10. Système de préhension selon la revendication 1, **caractérisé en ce que** pour déplacer le premier et le second bras de préhension (20, 30, 220, 230) par rapport au corps (3, 203), un disque-came (46, 146, 246) est relié au premier et au second bras de préhension (20, 30, 220, 230).

11. Système de préhension selon la revendication 1, **caractérisé en ce que**, pour fermer le second bras de préhension (30) en direction du premier bras de préhension (20), un levier de réglage (36) est relié au premier et au second bras de préhension (20, 30).

12. Système de préhension selon la revendication 1, **caractérisé en ce que** le premier bras de préhension (20) est résistant à la rotation et **en ce que** le second bras de préhension (30) est rotatif.

13. Système de préhension selon la revendication 1, **caractérisé en ce que** le premier bras de préhension (220) est relié à au moins un rouleau (206) et **en ce que** le corps (203) comprend au moins une pointe (204, 205) sur laquelle roule le rouleau (206).

14. Système de préhension selon la revendication 13, **caractérisé en ce que** le second bras de préhension (230) est relié par une cheville (212) au premier bras de préhension (220) et est prétendu vers une position ouverte.

15. Système de préhension selon la revendication 14, **caractérisé en ce que** la cheville (212) est reliée à un disque-came (246), qui déplace la cheville (212).

16. Système de préhension selon la revendication 15, **caractérisé en ce que** la cheville (212) est reliée à un bras (209), qui est relié à un ressort (210), qui est également relié au second bras de préhension (230).

17. Système de préhension selon l'une quelconque des revendications 1 à 16, **caractérisé en ce qu'**une pluralité d'unités de préhension (1, 200) sont prévues, qui se déplacent dans le rail de guidage (2, 201).

18. Système de préhension selon la revendication 17, **caractérisé en ce que** chaque unité de préhension (1, 200) comprend un disque-came (46, 146, 246) relié au premier et au second bras de préhension (20, 30, 220, 230), au moyen duquel le premier et le second bras de préhension (20, 30, 220, 230) peut se déplacer par rapport au boîtier (3, 203).

19. Système de préhension selon la revendication 18, **caractérisé en ce que**, pour la coopération avec le disque-came, est prévue une came (50, 250).

20. Procédé pour la préhension de produits imprimés, **caractérisé en ce qu'**un produit imprimé (5) est saisi dans une unité de préhension (1, 200) d'un système de préhension selon l'une quelconque des revendications 1 à 19, et qu'ensuite le produit imprimé (5) se déplace par rapport à l'unité de préhension (1, 200) pendant la continuité du transport.

21. Procédé selon la revendication 20, **caractérisé en ce que** la saisie s'effectue au moyen d'un couple de bras de préhension (20, 30, 220, 230) et **en ce que** les deux bras de préhension (20, 30, 220, 230) se déplacent par rapport à l'unité de préhension (1, 200).

22. Procédé selon l'une quelconque des revendications 20 à 21, **caractérisé en ce que** l'unité de préhension (1, 200) se déplace à vitesse régulière et **en ce que** le produit imprimé (5) est freiné pendant qu'il se déplace.
